# FASCICULE DE BREVET EUROPEEN

(11) **EP 3 204 842 B1**
(45) Date de publication et mention de la délivrance du brevet: **12.05.2021**
(21) Numéro de dépôt: 15775760.0
(22) Date de dépôt: 12.08.2015
(51) Int. Cl.: G06F 3/0488, G09B 21/00, G09B 21/02

(54) **DISPOSITIF NOTAMMENT POUR AFFICHEUR DESTINÉ À DES MALVOYANTS ET AFFICHEUR COMPORTANT UN TEL DISPOSITIF**
VORRICHTUNG, INSBESONDERE FÜR EINE ANZEIGE FÜR SEHBEHINDERTE PERSONEN, UND ANZEIGE MIT SOLCH EINER VORRICHTUNG
DEVICE ESPECIALLY FOR A DISPLAY FOR VISUALLY IMPAIRED PEOPLE AND DISPLAY COMPRISING SUCH A DEVICE

(30) Priorité: 18.08.2014 FR 1401870
(43) Date de publication de la demande: 16.08.2017
(73) Titulaire: Inside Vision, 91350 Grigny (FR)
(72) Inventeur: LE ROUZO, Denis, 75013 Paris (FR); MAUDUIT, Damien, 91700 Saint Genevieve des Bois (FR)
(74) Mandataire: Loyer & Abello
(86) Numéro de dépôt international: PCT/FR2015/000175
(87) Numéro de publication internationale: WO 2016/027011

(56) Documents cités:
- EP-A1- 2 211 325
- WO-A2-2012/170745
- GB-A- 2 508 673
- US-A1- 2011 157 037
- US-A1- 2011 179 388
- US-A1- 2013 249 821
- US-A1- 2013 328 809
- US-A1- 2014 082 490
- US-B1- 6 489 951

## Description

La présente invention concerne un dispositif notamment pour afficheur destiné à des malvoyants et afficheur comportant un tel dispositif.

Il sera rappelé qu'une personne malvoyante est une personne dont l'acuité visuelle du meilleur œil, après correction et, à 5 mètres, est inférieure ou égale à 3/10^{e}. La présente invention concerne toutes ces personnes mais également les personnes non voyantes, qui ne voient pas et qui sont atteintes de cécité. Dans le cadre de la présente invention, ces deux groupes de personnes seront ci-après indifféremment désignés par le terme « malvoyants ».

Actuellement, les malvoyants utilisent des afficheurs braille qui comportent des cellules braille disposées côte à côte afin de former une plage de lecture, et des boutons de commande pour déclencher des commandes de navigation dans un texte ainsi que dans un clavier braille.

De tels afficheurs braille sont actuellement proposés avec ou sans possibilité de raccordement à un écran d'ordinateur. Comme exemple, seront cités les dispositifs décrits notamment dans les documents US-2008/068343-A, WO-98/26583-A, EP-874345-A et FR-2955689-A. Le document GB2508673-A décrit une tablette tactile comportant une surcouche sur l'écran tactile servant de guide pour une personne aveugle.

Tous ces dispositifs de l'art antérieur ou actuellement commercialisés ont pour seule fonction de permettre la frappe et la lecture d'un texte.

Du fait du développement de l'informatique, sont apparus de nombreux logiciels qui ne peuvent être utilisés par ces afficheurs braille.

Aussi un des buts de la présente invention est-il de fournir un dispositif notamment pour afficheur destiné à des malvoyants afin de leur permettre de choisir et d'utiliser différents logiciels.

Un autre but de l'invention est de fournir de tels dispositifs qui soient de mise en œuvre facile et rapide pour des malvoyants.

Un but supplémentaire de l'invention est de fournir un afficheur comportant un tel dispositif.

Ces buts, ainsi que d'autres qui apparaîtront par la suite, sont atteints par un dispositif selon la revendication indépendante 1.

Avantageusement, l'écran tactile comprend le long d'un de ses bords une ligne d'icônes correspondant chacune à un logiciel.

De préférence, l'écran tactile est divisé au moins en autant de colonnes que d'icônes, et ledit dispositif comprend des moyens pour déterminer la position du doigt d'un utilisateur dans les empreintes de l'écran tactile.

Avantageusement, l'écran tactile comporte une colonne « suite » afin de faire défiler les icônes.

Avantageusement, l'écran tactile comporte une colonne « précédent » pour faire défiler les icônes.

De préférence, le dispositif comprend aussi un émetteur vocal permettant d'identifier chaque icône déterminée par la position du doigt de l'utilisateur.

Avantageusement, le dispositif comprend aussi un afficheur braille permettant d'identifier chaque icône déterminée par la position du doigt de l'utilisateur.

Avantageusement, l'écran tactile comporte des empreintes correspondant à des « curseurs routine ».

De préférence, l'écran tactile est quadrillé au moins dans la zone de ces empreintes.

La présente invention concerne également un afficheur pour malvoyants comportant un dispositif tel que celui décrit ci-dessus.

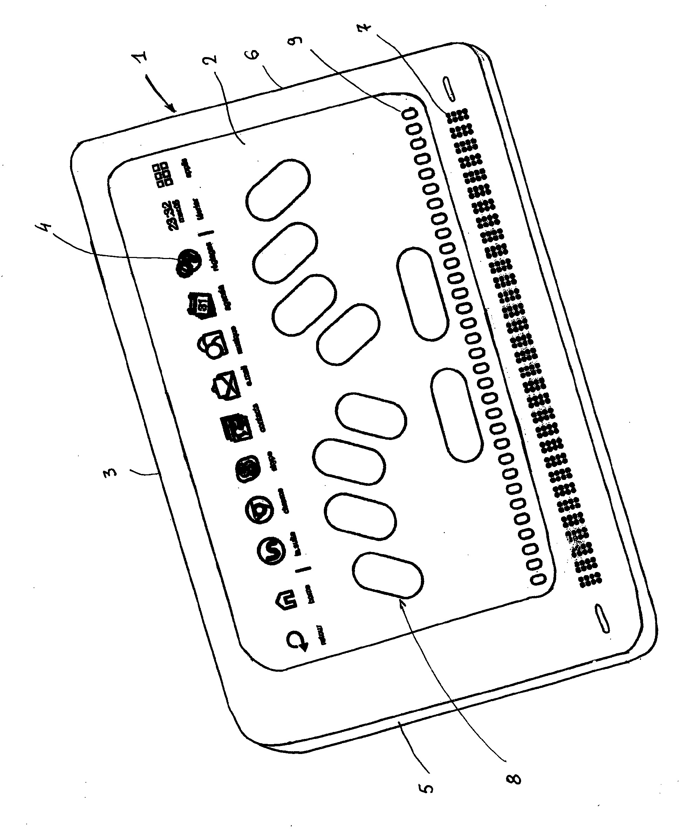

La description qui va suivre et qui ne présente aucun caractère limitatif, est relative à un mode de réalisation de la présente invention et doit être lue en regard de la figure unique annexée qui est une vue en perspective d'un dispositif selon la présente invention.

Afin de donner un sens aux termes supérieur, inférieur, droite et gauche, il sera considéré que ces indications sont données par rapport à un utilisateur faisant face au dispositif représenté.

Ainsi qu'on peut le voir sur cette figure, un dispositif selon la présente invention, est constitué d'un écran tactile 2 formant la face supérieure d'un afficheur, désigné dans son ensemble par la référence 1, en l'occurrence à destination des malvoyants. L'afficheur 1 et l'écran tactile 2 sont de forme rectangulaire.

Sur un des bords de l'écran tactile, en l'occurrence un bord longitudinal, tel que le bord longitudinal supérieur 3 selon le présent exemple de réalisation, est disposée une ligne .d'icônes 4 : cet écran tactile 2 est divisé en au moins autant de colonnes que d'icônes. De plus, une première colonne d'extrémité constitue l'équivalent d'une touche « précédent » et une seconde colonne d'extrémité constitue l'équivalent d'une touche « suite ». Par convention, la première colonne est située près du bord latéral gauche 5 de l'écran tactile 2, et la seconde colonne près du bord latéral droit 6 de ce même écran tactile 2, lorsque l'utilisateur est face à cet écran tactile.

Ce dispositif comporte aussi des moyens pour déterminer la position d'un doigt d'un utilisateur sur l'écran tactile 2. Ces moyens sont connus : ils permettent de déterminer la surface du doigt dans une colonne et donc d'activer l'icône correspondant à la colonne recouverte par la plus grande surface du doigt par rapport à la colonne adjacente.

Ces moyens de détermination sont couplés à un émetteur vocal et/ou un afficheur braille 7 énonçant et/ou permettant de lire le nom du logiciel associé à l'icône identifiée comme décrit ci-dessus. L'afficheur braille est, dans cet exemple de réalisation, situé près du bord inférieur de l'écran tactile 2.

Un tel dispositif permet donc à un malvoyant de choisir un logiciel de travail, par exemple, en faisant glisser son doigt sur cet écran tactile 2 ce qui lui permet d'entendre le nom des logiciels et/ou de lire celui-ci sur l'afficheur braille 7 et de sélectionner celui qu'il désire en maintenant son doigt sur la colonne correspondant à l'icône dont il entend et/ou lit le nom.

Selon un mode de réalisation préférée de la présente invention, l'écran tactile 2 comporte aussi des empreintes 8 correspondant aux doigts écartés des deux mains : l'utilisateur est ainsi guidé pour poser ses doigts afin de pouvoir écrire en braille. Néanmoins, cet écran tactile 2 peut comporter un quadrillage en particulier au niveau de ces empreintes 8 en relation avec des moyens pour déterminer la position du doigt qui commande les caractères braille.

Par le terme empreinte, est désignée une marque en creux correspondant sensiblement à l'extrémité d'un doigt d'un utilisateur.

L'écran tactile peut aussi comporter des empreintes correspondant à des « curseurs routines » 9 qui permettent à l'utilisateur de sélectionner, valider mais aussi placer le curseur d'écriture à l'endroit choisi par l'utilisateur en déplaçant son doigt sur un tel écran.

Selon un mode de réalisation préféré de la présente invention, les curseurs routines 9 sont situés dans une empreinte linéaire, donc en forme de rigole, qui est située sur un côté de l'écran tactile 2. En général, celui-ci comporte deux empreintes linéaires situées sur deux de ses côtés opposés.

Ainsi que l'aura compris l'homme du métier, l'écran tactile 2, en particulier dans ce dernier mode de réalisation, peut couvrir toute la surface du dispositif.

Comme précédemment énoncé, l'invention concerne également un afficheur pour malvoyants comportant un dispositif tel que celui décrit ci-dessus.

## Revendications

1. Dispositif comportant un écran tactile (2), notamment pour afficheur destiné à des malvoyants, **caractérisé par le fait que** ledit écran tactile (2) comporte des empreintes (8, 9) comprenant exactement dix empreintes (8) situées à des positions correspondant aux dix doigts écartés des mains droite et gauche d'un utilisateur pour pouvoir écrire en braille, chacune des dix empreintes comportant une marque en creux correspondant sensiblement à l'extrémité d'un doigt d'un utilisateur, les dix empreintes (8) étant configurées pour guider le positionnement des doigts de l'utilisateur.

2. Dispositif selon la revendication 1, **caractérisé en ce que** l'écran tactile (2) comprend le long d'un de ses bords une ligne d'icônes (4) correspondant chacune à un logiciel.

3. Dispositif selon la revendication 2, **caractérisé par le fait que** l'écran tactile (2) est divisé au moins en autant de colonnes que d'icônes, et que ledit dispositif comprend des moyens pour déterminer la position du doigt d'un utilisateur dans les empreintes (8) de l'écran tactile (2).

4. Dispositif selon la revendication 2, **caractérisé en ce que** l'écran tactile (2) comporte une colonne « suite » afin de faire défiler les icônes.

5. Dispositif selon la revendication 2, **caractérisé en ce que** l'écran tactile (2) comporte une colonne « précédent» pour faire défiler les icônes.

6. Dispositif selon l'une quelconque des revendications 4 et 5, **caractérisé par le fait qu'**il comprend aussi un émetteur vocal permettant d'identifier chaque icône déterminée par la position du doigt de l'utilisateur.

7. Dispositif selon l'une quelconque des revendications 4 à 6, **caractérisé par le fait qu'**il comprend aussi un afficheur braille permettant d'identifier chaque icône déterminée par la position du doigt de l'utilisateur.

8. Dispositif selon la revendication 2, **caractérisé par le fait que** l'écran tactile (2) est quadrillé au moins dans la zone des empreintes (8).

9. Dispositif selon l'une quelconque des revendications 1 à 8, **caractérisé par le fait que** l'écran tactile (2) comporte des empreintes correspondant à des « curseurs routines » (9).

10. Afficheur pour malvoyants comportant un dispositif selon l'une quelconque des revendications 1 à 9.

## Patentansprüche

1. Vorrichtung umfassend einen Touchscreen (2), insbesondere für eine Anzeige für sehbehinderte Personen, **dadurch gekennzeichnet, dass** der Touchscreen (2) Abdrücke (8, 9) aufweist, bestehend aus zehn Abdrücken (8), welche in Positionen angeordnet sind, die den gespreizten Fingern der rechten und linken Hand eines Benutzers entsprechen, um in Brailleschrift schreiben zu können, wobei jeder der 10 Abdrücke eine hohle Stelle aufweist, welche im Wesentlichen der Fingerspitze eines Benutzers entspricht, wobei die 10 Abdrücke (8) so konfiguriert sind, dass sie die Positionierung der Finger des Benutzers führen.

2. Vorrichtung gemäß Anspruch 2, **dadurch gekennzeichnet, dass** der Touchscreens (2) entlang einer seiner Kanten eine Reihe von Symbolen (4) umfasst, welche jeweils einem Softwareprogramm entsprechen.

3. Vorrichtung gemäß Anspruch 2, **dadurch gekennzeichnet, dass** der Touchscreen (2) in mindestens genauso viele Spalten unterteilt ist, wie Symbole vorhanden sind, und dass die Vorrichtung Mittel umfasst, um die Positionierung des Fingers eines Benutzers in den Abdrücken (8) des Touchscreens (2) zu bestimmen.

4. Vorrichtung gemäß Anspruch 2, **dadurch gekennzeichnet, dass** der Touchscreen (2) eine Spalte "Fortsetzung" umfasst, um durch die Symbole zu scrollen.

5. Vorrichtung gemäß Anspruch 2, **dadurch gekennzeichnet, dass** der Touchscreen (2) eine Spalte "vorhergehend" umfasst, um durch die Symbole zu scrollen.

6. Vorrichtung gemäß einem der Ansprüche 4 und 5, **dadurch gekennzeichnet, dass** sie weiterhin ein Sprachsender umfasst, welcher es ermöglicht, jedes Symbol zu identifizieren, welches durch die Position des Fingers des Benutzers bestimmt wird.

7. Vorrichtung gemäß einem der Ansprüche 4 bis 6, **dadurch gekennzeichnet, dass** sie weiterhin eine Brailleanzeige umfasst, welche es ermöglicht, jedes Symbol zu identifizieren, welches durch die Position des Fingers des Benutzers bestimmt wird.

8. Vorrichtung gemäß Anspruch 2, **dadurch gekennzeichnet, dass** der Touchscreen (2) zumindest im Bereich der Abdrücke (8) in Quadrate unterteilt ist.

9. Vorrichtung gemäß einem der Ansprüche 1 bis 8, **dadurch gekennzeichnet, dass** der Touchscreen (2) Abdrücke umfasst, welche einer "Curserrouting-Taste" entsprechen.

10. Anzeige für sehbehinderte Personen welche eine Vorrichtung gemäß einem der Ansprüche 1 bis 9 umfasst.

## Claims

1. A device comprising a tactile screen (2), more especially for a display for visually impaired people, **characterised in that** said tactile sceen (2) comprises imprints (8, 9) comprising exactly ten imprints (8) located at positions corresponding to the ten spread fingers of a user's right and left hands to be able to write in Braille, each of the ten imprints having a recessed mark substantially corresponding to the tip of a user's finger, the ten imprints (8) being configured to guide the positioning of the user's fingers.

2. Device according to claim 1, **characterised in that** the tactile screen (2) comprises, along one of its edges, a line of icons each corresponding to a software.

3. Device according to claim 2, **characterised in that** the tactile screen (2) is divided at least into as many columns as icons, and **in that** said device comprises means for determining the position of a user's finger in the imprints (8) of the tactile screen (2).

4. Device according to claim 2, **characterised in that** the tactile screen (2) comprises a "next" column in order to scroll through the icons.

5. Device according to claim 2, **characterised in that** the tactile screen (2) comprises a "previous" column in order to scroll through the icons.

6. Device according to any one of claims 4 and 5, **characterised in that** it also comprises a voice emitter to identify each icon determined by the position of the user's finger.

7. Device according to any one of claims 4-6, **characterised in that** it also comprises a braille display to identify each icon determined by the position of the user's finger..

8. Device according to claim 2, **characterised in that** the tactile screen is gridded at least in the zone of the imprints.

9. Device according to any one of claims 1-8, **characterised in that** the tactile screen comprises imprints corresponding to "routine cursors".

10. A display for visually impaired people comprising a device according to any one of claims 1-9.
